(19)

Europäisches Patentamt
European Patent Office
Office européen des brevets

(11) **EP 4 497 490 A2**

(12) **EUROPEAN PATENT APPLICATION**

(43) Date of publication:
**29.01.2025 Bulletin 2025/05**

(21) Application number: **24183895.2**

(22) Date of filing: **24.06.2024**

(51) International Patent Classification (IPC):
**B01D 53/04** (2006.01)     **B01J 20/28** (2006.01)

(52) Cooperative Patent Classification (CPC):
**B01D 53/04; B01J 20/28083; B01J 20/28085; B01J 20/28097;** B01D 2252/204; B01D 2253/106; B01D 2253/202; B01D 2253/25; B01D 2253/308; B01D 2257/504; B01D 2258/06

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.07.2023   US 202318347615**

(71) Applicant: **Robert Bosch GmbH
70442 Stuttgart (DE)**

(72) Inventors:
- **Kornbluth, Mordechai
  Brighton, Massachusetts, 02135 (US)**
- **Kitchaev, Daniil
  Somerville, Massachusetts, 02144 (US)**
- **Gadelrab, Karim
  Boston, MA, 02111 (US)**
- **Molinari, Nicola
  Cambridge, MA, 01238 (US)**

(54) **ATMOSPHERIC CARBON DIOXIDE SORBENT**

(57)      A direct air capture (DAC) system includes a porous sorbent structure for $CO_2$ capture, the structure including nanopores sized 4-10 nm forming an interpenetrating network of channels for $CO_2$ access to an interior volume of the sorbent, macropores for $CO_2$ diffusion within the sorbent, and nanoparticles sized about 4-10 nm and located within the network of channels.

FIG. 1

EP 4 497 490 A2

## Description

TECHNICAL FIELD

The present disclosure relates to a sorbent for capture of atmospheric carbon dioxide ($CO_2$) and a method of making and using the same.

BACKGROUND

Carbon dioxide is a notorious greenhouse gas whose emissions have been sharply on the rise since the Industrial Revolution began in the 18th century. Since then, the $CO_2$ emissions have been a confirmed culprit in the climate change around the world. Recent findings of the International Panel on Climate Change have proposed that the $CO_2$ emissions should be halved by 2030 to avoid further negative impact on the planet. Various technologies have been developed to capture atmospheric $CO_2$, but their drawbacks prevent realization of more widespread $CO_2$ sequestration from air.

SUMMARY

In at least one embodiment, a direct air capture (DAC) system is disclosed. The system may include a porous sorbent structure for $CO_2$ capture, the structure may include nanopores sized 4-10 nm forming an interpenetrating network of channels for $CO_2$ access to an interior volume of the sorbent; macropores for $CO_2$ diffusion within the sorbent; and nanoparticles sized about 4-10 nm and located within the network of channels. The DAC system may include nanoparticles which are hydrophobic. The nanoparticles may include hydrophobic and hydrophilic nanoparticles. The DAC system may further include nanoparticles of substantially uniform size. The DAC system may have at least a portion of the nanopores and nanoparticles having a uniform size. The channels may include localized hydrophilic regions. The DAC system may further include a controller configured to regulate relative humidity of the system.

In another embodiment, a direct air capture (DAC) system is disclosed. The system may include a compartment including a porous sorbent structure for $CO_2$ capture, the structure including nanopores, each sized at at least about 4 nm, the nanopores forming an intertwined, interpenetrating network of channels configured to attract a controlled amount of water less than a volume causing flooding within the channels such that the sorbent's $CO_2$ sorption is increased and energy requirements of the sorbent regeneration are reduced; and a controller programmed to regulate relative humidity (RH) of the system. The DAC system may include at least a portion of the nanopores including nanopores of a uniform size. The DAC system may include a majority of the nanopores having a size of about 4 nm. The DAC system may further include a plurality of macropores. The DAC system's relative humidity may be maintained at a value less than about 0.8. The DAC system may further include an exchange fluid configured to remove $CO_2$ from the structure through the channels. The DAC system's controlled amount of water in the sorbent may be dependent on RH, temperature, and degree of $CO_2$ saturation of the sorbent. The DAC system's network of channels may further include nanoparticles.

In yet another embodiment, a direct air capture (DAC) system is disclosed. The system may include a porous sorbent having a network of nanopores penetrating a volume of the sorbent, the nanopores having a uniformity characteristic within a range of about 4-10 nm configured to allow a controlled amount of water within the network of nanopores; and nanoparticles dispersed within the network of nanopores. The controlled amount may be less than an amount resulting in flooded channels. The controlled amount may be dependent on relative humidity (RH), temperature, and degree of $CO_2$-saturation of the sorbent. The nanoparticles may include hydrophobic nanoparticles. The DAC system may further include a controller programmed to maintain RH of the system below a predetermined value.

BRIEF DESCRIPTION OF THE DRAWINGS

Figure 1 is a schematic depiction of a direct-air-capture (DAC) system with $CO_2$ sorption into a solid sorbent and sorbent regeneration;

Figure 2 shows a schematic depiction of an internal structure of a prior art sorbent including macropores and nanopores;

Figure 3 is a schematic depiction of the states of water uptake by a porous $CO_2$ sorbent and changes regarding sorbent saturation with water with increasing humidity;

Figure 4A shows a schematic depiction of a sorbent structure including a network of expanded channels for $CO_2$ transport;

Figure 4B shows a schematic depiction of a sorbent structure including a network of expanded channels and hydrophilic regions resulting in partial water saturation of the network including dry pathways for $CO_2$ transport;

Figure 5A is an example pore size distribution plot for the Comparative Example having a mean pore size of 1 nm and Example having a mean pore size of 4 nm; and

Figure 5B is a plot of water uptake curves corresponding to the pore size distribution of Fig. 5A for the Example and Comparative Example.

DETAILED DESCRIPTION

Embodiments of the present disclosure are described herein. It is to be understood, however, that the disclosed embodiments are merely examples and other embodiments may take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the present embodiments. As those of ordinary skill in the art will understand, various features illustrated and described with reference to any one of the figures may be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

Except in the examples, or where otherwise expressly indicated, all numerical quantities in this description indicating amounts of material or conditions of reaction and/or use are to be understood as modified by the word "about" in describing the broadest scope of the disclosure. Practice within the numerical limits stated is generally preferred. Also, unless expressly stated to the contrary: percent, "parts of," and ratio values are by weight; the description of a group or class of materials as suitable or preferred for a given purpose in connection with the disclosure implies that mixtures of any two or more of the members of the group or class are equally suitable or preferred; description of constituents in chemical terms refers to the constituents at the time of addition to any combination specified in the description, and does not necessarily preclude chemical interactions among the constituents of a mixture once mixed.

The first definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

It must also be noted that, as used in the specification and the appended claims, the singular form "a," "an," and "the" comprise plural referents unless the context clearly indicates otherwise. For example, reference to a component in the singular is intended to comprise a plurality of components.

As used herein, the term "substantially," "generally," or "about" means that the amount or value in question may be the specific value designated or some other value in its neighborhood. Generally, the term "about" denoting a certain value is intended to denote a range within ± 5% of the value. As one example, the phrase "about 100" denotes a range of 100 ± 5, *i.e.* the range from 95 to 105. Generally, when the term "about" is used, it can be expected that similar results or effects according to the disclosure can be obtained within a range of ± 5% of the indicated value. The term "substantially" may modify a value or relative characteristic disclosed or claimed in the present disclosure. In such instances, "substantially" may signify that the value or relative characteristic it modifies is within ± 0%, 0.1%, 0.5%, 1%, 2%, 3%, 4%, 5% or 10% of the value or relative characteristic.

It should also be appreciated that integer ranges explicitly include all intervening integers. For example, the integer range 1-10 explicitly includes 1, 2, 3, 4, 5, 6, 7, 8, 9, and 10. Similarly, the range 1 to 100 includes 1, 2, 3, 4.... 97, 98, 99, 100. Similarly, when any range is called for, intervening numbers that are increments of the difference between the upper limit and the lower limit divided by 10 can be taken as alternative upper or lower limits. For example, if the range is 1.1. to 2.1 the following numbers 1.2, 1.3, 1.4, 1.5, 1.6, 1.7, 1.8, 1.9, and 2.0 can be selected as lower or upper limits.

In the examples set forth herein, concentrations, temperature, and reaction conditions (*e.g.,* pressure, pH, flow rates, *etc.*) can be practiced with plus or minus 50 percent of the values indicated rounded to or truncated to two significant figures of the value provided in the examples. In a refinement, concentrations, temperature, and reaction conditions (e.g., pressure, pH, flow rates, *etc.*) can be practiced with plus or minus 30 percent of the values indicated rounded to or truncated to two significant figures of the value provided in the examples. In another refinement, concentrations, temperature, and reaction conditions (e.g., pressure, pH, flow rates, *etc.*) can be practiced with plus or minus 10 percent of the values indicated rounded to or truncated to two significant figures of the value provided in the examples.

For all compounds expressed as an empirical chemical formula with a plurality of letters and numeric subscripts (e.g., $CH_2O$), values of the subscripts can be plus or minus 50 percent of the values indicated rounded to or truncated to two significant figures. For example, if $CH_2O$ is indicated, a compound of formula $C_{(0.8-1.2)}H_{(1.6-2.4)}O_{(0.8-1.2)}$. In a refinement, values of the subscripts can be plus or minus 30 percent of the values indicated rounded to or truncated to two significant figures. In still another refinement, values of the subscripts can be plus or minus 20 percent of the values indicated rounded to or truncated to two significant figures.

As used herein, the term "and/or" means that either all or only one of the elements of said group may be present. For example, "A and/or B" means "only A, or only B, or both A and B". In the case of "only A," the term also covers the possibility that B is absent, i.e. "only A, but not B".

It is also to be understood that this disclosure is not limited to the specific embodiments and methods described below, as specific components and/or conditions may, of course, vary. Furthermore, the terminology used herein is used only for the purpose of describing particular embodiments of the present disclosure and is not intended to be limiting in any way.

The term "comprising" is synonymous with "including," "having," "containing," or "characterized by." These terms are inclusive and open-ended and do not exclude additional, unrecited elements or method steps.

The phrase "consisting of' excludes any element, step, or ingredient not specified in the claim. When this phrase appears in a clause of the body of a claim, rather than immediately following the preamble, it limits only the element set forth in that clause; other elements are not excluded from the claim as a whole.

The phrase "consisting essentially of' limits the scope of a claim to the specified materials or steps, plus those that do not materially affect the basic and novel characteristic(s) of the claimed subject matter.

With respect to the terms "comprising," "consisting of," and "consisting essentially of," where one of these three terms is used herein, the presently disclosed and claimed subject matter can include the use of either of the other two terms.

The term "one or more" means "at least one" and the term "at least one" means "one or more." The terms "one or more" and "at least one" include "plurality" as a subset.

The description of a group or class of materials as suitable for a given purpose in connection with one or more embodiments implies that mixtures of any two or more of the members of the group or class are suitable. Description of constituents in chemical terms refers to the constituents at the time of addition to any combination specified in the description, and does not necessarily preclude chemical interactions among constituents of the mixture once mixed. First definition of an acronym or other abbreviation applies to all subsequent uses herein of the same abbreviation and applies mutatis mutandis to normal grammatical variations of the initially defined abbreviation. Unless expressly stated to the contrary, measurement of a property is determined by the same technique as previously or later referenced for the same property.

Carbon dioxide or $CO_2$ is a primary greenhouse gas accounting for about 80% of all U.S. annual greenhouse gas emissions from human activities. The $CO_2$ emissions are a well-recognized global problem. Greenhouse gasses are gasses that trap heat in the atmosphere. The heat trapping causes changes in the radiative balance of the Earth that alter climate and weather patterns at global and regional scales. $CO_2$ is a chemical compound made up of molecules that each have one carbon atom covalently double bonded to two oxygen atoms. $CO_2$ is found in the gas state at ambient temperature. In the air, $CO_2$ is transparent to visible light but absorbs infrared radiation, thereby acting as a greenhouse gas. $CO_2$ enters the atmosphere through burning of fossil fuels such as coal, natural gas, and oil, solid waste, trees and other biological materials. $CO_2$ further enters the atmosphere as a result of certain chemical reactions such as manufacturing of cement or aluminum. Additionally, when methane enters the atmosphere, it combines with oxygen to form $CO_2$.

Because of its negative impact on the global climate, efforts have been made to reduce $CO_2$ emissions, mostly by capture of $CO_2$ at the source of release such as from smokestacks of power plants, cement plants, or aluminum plants. Yet, much of the man-made $CO_2$ emissions cannot be captured at the source such as those originating from cars or airplanes. Additionally, capture of the already released $CO_2$, so called legacy $CO_2$, is highly desirable to reduce the overall climate impact of the $CO_2$ greenhouse gas.

Hence, the extraction of $CO_2$ from ambient air is a potential route for the mitigation of greenhouse gas emissions and associated climate change. The direct extraction of $CO_2$ from air via a sorbent, typically termed direct air capture (DAC), is the gold-standard technology for this objective.

A typical sorbent technology in DAC includes a porous support material functionalized with amine-containing molecules or polymers. For example, a porous silica or cellulose support material may be functionalized with amine-containing molecules or polyethyleneimine (PEI). In this type of sorbent, the amines react spontaneously with $CO_2$ to separate the $CO_2$ from the air while the porous support material provides a high surface area for the amine/air interface, ensures thar the air can flow through the sorbent, and anchors the amines in the solid sorbent, preventing their volatilization.

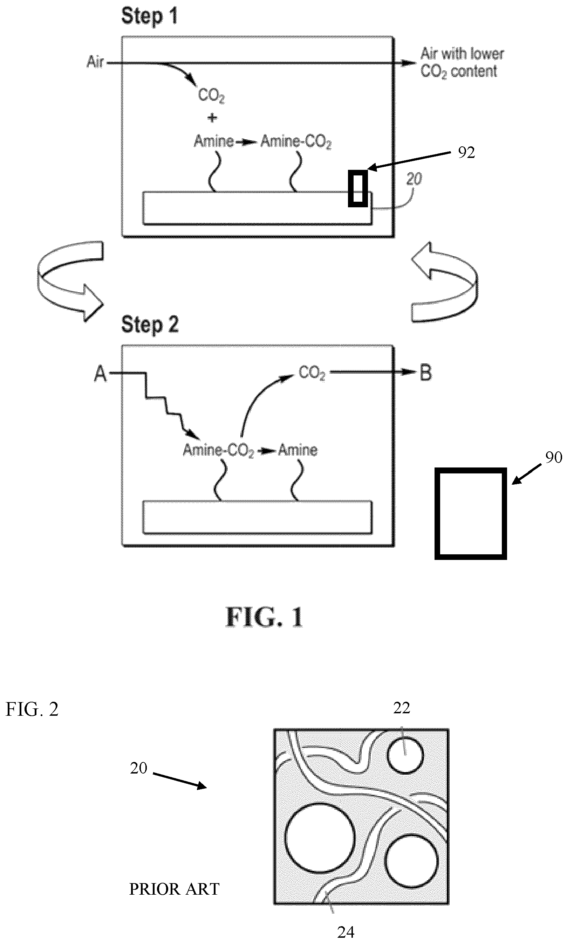

A non-limiting example DAC sorption system/process includes two steps, shown schematically in Fig. 1. As can be seen in Fig. 1, in the first stage or step 1, a sorbent 20 chosen to selectively absorb $CO_2$ is exposed to air until it reaches a desired saturation point. In the first step of Fig. 1, air is passed over an amine-functionalized sorbent 20, which separates $CO_2$ from the incoming gas stream, denoted as air. In the second stage or step 2, the sorbent is regenerated by stripping the absorbed $CO_2$ from the sorbent 20 and storing the captured $CO_2$ at high pressure and purity for later utilization or sequestration, marked as B. In the second step, the $CO_2$ bound to the solid sorbent 20 is detached using a change in temperature, pressure, humidity level, or other stimulus, marked as A, regenerating the sorbent to its pristine state and releasing the $CO_2$ for storage or utilization. The process can then be repeated. In the schematic, the line connecting "amine" to "porous support" denotes that the amines are chemically bonded to the support.

While the first stage of this process is spontaneous, as the sorbent chemistry is chosen to react favorably with $CO_2$, the regeneration stage requires energy input to desorb the captured $CO_2$. The energy may come in the form of heat, changes in external pressure, changes in humidity, changes in potential, or washing with an exchange or transfer fluid having a component with preferential affinity towards $CO_2$, as was described in U.S. Patent Application No. 18/162,326, which is hereby incorporated in its entirety by reference.

The energy cost of the DAC process, as well as the useful life of the sorbent material, are largely determined by the efficiency of the regeneration stage, making it an important design component of any DAC process. The cost of the DAC process is dependent on the amount of $CO_2$ which the sorbent can take up in a set amount of time as well as the energy input required to release the captured $CO_2$ during the regeneration stage.

A state-of-the-art sorbent technology in DAC typically include a porous support material functionalized with amine-containing molecules or polymers. For example, a porous silica, cellulose, or polystyrene support material may be functionalized with amine-containing functional groups. In this type of sorbent, the amines react spontaneously with $CO_2$ to separate $CO_2$ from the air while the porous support material provides a high surface area for the amine/air interface, ensures thar the air can flow through the sorbent, and anchors the amines in the solid sorbent, preventing their volatilization.

The porous sorbents used for $CO_2$ capture typically have a multiscale porosity schematically shown in Fig. 2. This structure may include a small number of macropores (20-200 nm diameter) and a larger number of nanopores (1-4 nm diameter). In Fig. 2, the sorbent 20 includes macropores 22 and nanopores 24.

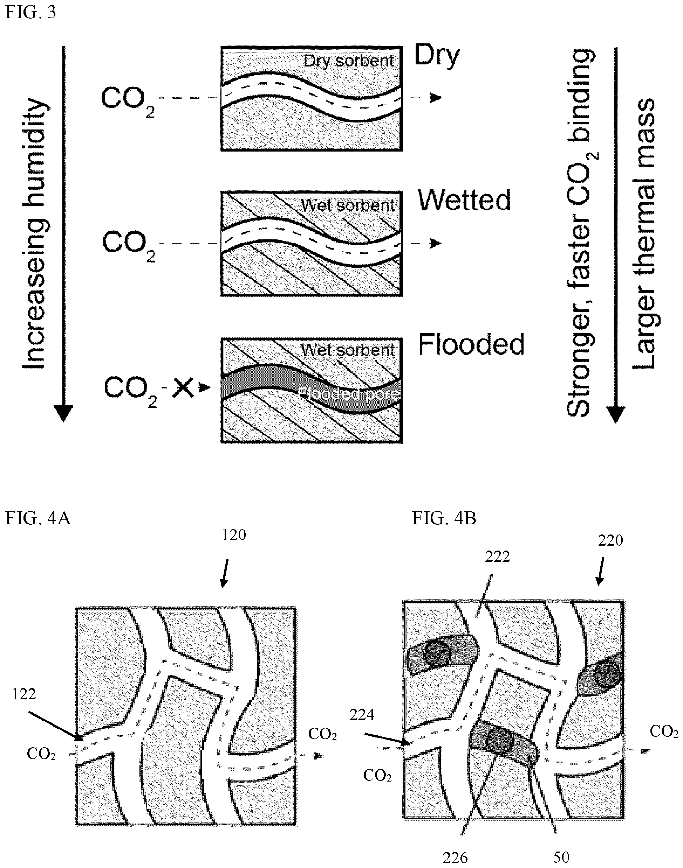

Amine-functionalized solid sorbents are generally hydrophilic and absorb water alongside $CO_2$ with the amount and structure of absorbed water dependent on ambient conditions such as humidity and temperature, as well as the type of sorbent material used. The states of water uptake and impact on sorbent performance are shown schematically in Fig. 3. As can be seen in Fig. 3, initially, the sorbent is dry. With the increasing humidity, water is absorbed by the bulk of the material, leading to a "wetted" state. At higher humidity levels, water condenses in the nanopores of the sorbent, leading to a "flooded" state. The absorbed water has a significant impact on the ability of the sorbent to take up $CO_2$. In both the "wetted" and "flooded" states, water improves $CO_2$ uptake by increasing the strength and rate of $CO_2$-sorbent binding. But in the "flooded" state, water impedes the long-range diffusion of $CO_2$ into the sorbent by blocking nanopores. Also, all forms of water increase the thermal mass of the sorbent thereby increasing the energy cost of thermal regeneration.

In some scenarios, water needs to be injected and removed from the sorbent. For example, an alternative to thermal regeneration is a process wherein the $CO_2$ is removed from the sorbent by washing it with a $CO_2$-exchange fluid such as a solution of ethylenediamine or an alkali hydroxide salt. The $CO_2$-exchange fluid must then be removed from the sorbent before the sorbent can be used for the next cycle of $CO_2$ capture. The efficiency of this regeneration process is highly dependent on how efficiently the sorbent nanopores can be flooded and drained without excessive energy usage.

The amount of $CO_2$ absorbed in a given amount of time is thus highly dependent on the diffusivity of $CO_2$ through the sorbent, the binding energy of $CO_2$ to the sorbent, and the kinetics of the binding reaction. Furthermore, the subsequent regeneration of the sorbent requires substantial energy input to release the bound $CO_2$ for storage or utilization. Both the sorption performance and regeneration cost are highly dependent on the amount of water absorbed by the sorbent material alongside $CO_2$ and whether or not the absorbed water floods the nanopores of the sorbent.

Therefore, there is a need to improve the DAC system to prevent sorbent flooding.

In one or more embodiments, a solid sorbent for DAC is disclosed. The sorbent may be configured to control water uptake of the solid sorbent material to increase or maximize its $CO_2$ sorption performance and decrease or minimize the regeneration step energy requirements.

The sorbent may be a solid. The sorbent may include a porous support material. The porous material may be functionalized with amine-containing molecules or polymers such as polyethyleneimine (PEI). The amine-based chemistry may be attached or immobilized on the support. The support material may include a mesoporous silica, cellulose, polymer such as polymethylmethacrylate (PMMA), or polystyrene (PS), the like, or a combination thereof. The porous material may form a porous body or a body having a solid structure including a plurality of pores within its internal volume. The amine may be attached by impregnation, grafting, or the like.

To attain the desired water uptake control, the sorbent may have a unique structure of the porous body. The sorbent may be configured to adjust the local water equilibrium in the internal volume of its body. The structure may include macropores and nanopores. The macropores are configured to allow for long-range gas diffusion. The macropores may measure about 20-200, 30-180, or 40-160 nm. The macropores may measure about, at least about, or at most about 20, 30, 40, 50, 60, 70 80, 90, 100, 110, 120, 130, 140, 150, 160, 170, 180, 190, 200, 210, or 220 nm, or any range of any two numerals named herein. The macropores may be randomly distributed within the sorbent. The macropores may not form a network or be part of a network within the sorbent. The macropores may be free of a contact with the nanopore network. Alternatively, the macropores may contact the nanopore network, providing a number of larger, macroscopic pathways through the sorbent. At least some of the nanopores may spread out from the macropores to provide contact to a large internal surface area of the sorbent.

The nanopores may form an intertwined network. The network may be interpenetrating, in other words, a network of nanopores penetrating a volume of the sorbent. The nanopores may be thus configured to allow $CO_2$ gas to access the interior volume of the sorbent.

The nanopores may have size of about 4-10, 5-9, or 6-8 nm. The nanopores may measure about, at least about, or at most about 4, 4.5, 5, 5.5, 6, 6.5, 7, 7.5, 8, 8.5, 9, 9.5, or 10 nm. At least some of the nanopores may have a size between 10-20 nm such as 10, 11, 12, 13, 14, 15, 16, 17, 18, 19, or 20 nm. The nanopores may have a uniformity characteristic, for example size, composition, shape, *etc.* The nanopores forming the network may have the same size. In a non-limiting example, the nanopores network may include majority or up to 50, 60, 70, 80, 90, 99, or 100 % of total nanopores having a uniformity characteristic. For example, at least some of the nanopores may have the same size of about 4 nm. Deviation of about ± 1 nm is contemplated. Uniformity characteristic, especially size, is relevant regarding efficient operation of the system. Non-uniform sizing may result in a wide range of relevant RHs at which flooding does not occur. The wide range of humidities may result in inefficient operation and waste in effort to prevent the flooding events from occurring. On the other hand, uniform sizing of the nanopores results in a narrow RH range such that all the water enters and leaves the sorbent at a narrow range of humidities. Controlling a narrow RH range may thus contribute to a more efficient and sustainable operation of the system.

The sorbent may be free of micropores or nanopores sized about 1-3 nm. The pores smaller than 4 nm tend to flood easily or at undesirably low relative humidity (RH), as was demonstrated and is described in the experimental section below. The flooding subsequently deactivates $CO_2$ sorption of the region affected by flooding.

A non-limiting example sorbent 120 having nanopores 122 with the size uniformity characteristic within the range of 4 to 10 nm is shown in Fig. 4A. As can be seen in Fig. 4A, the uniform pores forming a network allows $CO_2$ to travel through the sorbent volume. The expanded pore size disclosed herein may suppress flooding throughout the sorbent, as is demonstrated in the Experimental section below.

The sorbent may be a hydrophilic sorbent. The sorbent is thus attracted to water molecules. The sorbent may have affinity to water molecules. The sorbent may become wet easily and maintain wetness, saturation for a prolonged period of time. Alternatively, the sorbent may be more hydrophilic than hydrophobic, but include hydrophobic components. The hydrophobic components may be localized in the nanopores, form localized hydrophobic regions within the network. The sorbent may thus be overall hydrophilic, but include portions, pockets, or islands which are hydrophobic.

The sorbent structure may include one or more nanoparticles. The nanoparticles may be hydrophilic, hydrophobic, or a mixture of both. Unlike hydrophilic materials, which attract water molecules and maximize their contact with the water molecules, hydrophobic materials such as the hydrophobic nanoparticles are not attracted to water molecules and may seem to be repelled by it. Hydrophobic nanoparticles may thus cause formation of water droplets, minimizing contact with the water molecules.

The nanoparticles may be provided within one or more nanopores, macropores, or a combination thereof. Preferably, the nanoparticles may be evenly dispersed within the nanopore network. Presence of the nanoparticles in the macropores is acceptable but may not provide the desired effects described herein. The nanoparticles may form a connected network of non-flooded, dry, or water-free pores. The nanoparticles may also, or alternatively, form locally flooded, water-rich, or saturated regions with or within the network of water-free pores. The water-free and water-containing pores may be included in a ratio of about 30:70, 40:60, 45:55, 50:50, 60:40, 70:30, 80:10, or 90:10. The water-free pores need to form a percolating network such that there is a continuous, uninterrupted pathway through the sorbent material following the water-free pores. Hence, the water-free pores should be at least about 30, 31, 32, 33, 34, 35, 36, 37, 38, 39, 40, 41, 42, 43, 44, or 45% or more of the total nanopores.

The nanoparticles may have a size of about, at least about, or at most about 3, 3.2, 3.5, 3.8, 4, 4.2, 4.5, 4.8, 5, 5.2, 5.5, 5.8, 6, 6.2, 6.5, 6.8, 7, 7.2, 7.5, 7.8, 8, 8.2, 8.5, 8.8, 9, 9.2, 9.5, 9.8, or 10 nm. The nanoparticle size may be about 3-10, 3.2-8.8, or 3.5-7.5 nm. The nanoparticles may have a uniformity characteristic, similar to the pores. At least some of the nanoparticles may have a uniform size such that all, majority, or most of the nanoparticles included share a similar or same size such as 4 nm, of example. Alternatively, the nanoparticles may have different size.

The nanoparticles may have different or uniform chemical composition. For example, if both hydrophobic and hydrophilic nanoparticles are added, their composition will differ. Non-limiting example materials of the nanoparticles may include silica, alumina, zinc oxide, iron oxide, titanium oxide, tin oxide, zirconium oxide, silver oxide, or their combination. The nanoparticles may include a coating imparting one or more beneficial properties such as hydrophilicity or hydrophobicity. Non-limiting example hydrophobic coatings may include PDMS (polydimethylsiloxane), PTFE (polytetrafluoroethylene), or PS (polystyrene). Non-limiting example hydrophilic coatings may include PEG (polyethylene glycol), PVA (polyvinyl alcohol) or PEI (polyethyleneimine).

The nanoparticles may thus enable formation of a system or network of hydrophobic, water-free channels for $CO_2$ transport, connected to hydrophilic regions which attract water that enables $CO_2$ binding. Presence of the nanoparticles in the sorbent may create locally saturable regions while maintaining a connected network of non-saturable pores. A non-limiting schematic example of a sorbent including hydrophobic and hydrophilic regions is shown in Fig. 4B.

In Fig. 4B, a porous sorbent body 220 includes a network of pores 222 having channels 224 for $CO_2$ transport through the sorbent body 120. The sorbent body 220 may include hydrophilic nanoparticles 226, which are schematically shown in presence of water 50 attracted to the nanoparticles' surface. The sorbent body 220 further includes hydrophobic portions such as the percolating channels 224 within pores resistant to flooding due to their larger size and/or the presence of hydrophobic nanoparticles in them. The percolating network of pores 222, 224 resists flooding and allows for $CO_2$ transport throughout the sorbent 220 while locally saturated regions 226 provide the benefit of stronger and faster $CO_2$ binding.

Addition of the nanoparticles may influence the size of the nanopores during formation of the sorbent. For example, during the polymerization and crosslinking of the polymeric sorbent, the nanoparticles may template the formation of nanopores with a diameter analogous to the size of the nanoparticle. The nanoparticles may thus act as a scaffolding, holding the pores open to achieve the desired size or uniformity characteristic described herein. Furthermore, the hydrophilicity or hydrophobicity of the nanoparticle surface may modify the local water equilibrium in the vicinity of the nanoparticles, promoting or suppressing flooding.

The combination of structural features disclosed herein, specifically the presence of nanoparticles, pore size distribution of nanopores of about 4-10 nm, or both, may result in a controlled amount of water being present in the pores or the sorbent, but allowing the gas to move through the sorbent material. Flooding is thus avoided and diffusion of $CO_2$ through the sorbent is enabled. The sorbent which is partially water-attracting and partially water repulsing combines the advantages of water uptake (stronger and faster $CO_2$ binding) without incurring the penalties (poor gas transport and excessive thermal mass). Local water equilibrium may be thus achieved within the body of the sorbent, preventing excessive water uptake in DAC, and ensuring that the $CO_2$ sorbent can be operated efficiently.

The controlled amount of water may be relative humidity (RH) dependent. To prevent flooding, ambient or relative humidity (RH) should be kept below about 0.8-0.9. RH is a measure of how much water vapor is in a water-air mixture compared to the maximum amount possible. RH is a ratio of the amount of atmospheric moisture present relative to the amount that would be present if the air were saturated. RH is a function of moisture content and temperature. The controlled amount may be less than an amount resulting in flooded channels. The flooding or flooded channels relate to such saturation of the channels, network, or both with water that $CO_2$ movement through the sorbent is prevented.

As is shown in the experimental section below, a water-uptake curve demonstrated that with the increased pore size of about 4-10 nm, the flooding is triggered by RH in the range of about 0.8-0.9 and higher. Addition of the hydrophobic nanoparticles may push the RH range even further, to values greater than about 0.8-0.9.

The controlled saturation may thus occur abruptly, at a high RH, rather than gradually over a wide range of conditions. The RH may be thus utilized to initiate and/or terminate saturation events within the sorbent. In other words, the sorbent may be switched between water-saturated and free of water or non-saturated states, the switch being triggered by fluctuation or change in RH. The fluctuation or change in RH may be controlled, for example by a central controller. The sorbent may thus exhibit controlled water presence within the sorbent tuned to the desired operating condition of the DAC sorbent.

The sorbent disclosed herein may be part of a system structured to sequester $CO_2$ from dilute sources. The system may be a DAC system. The system is arranged to capture $CO_2$ from air, atmosphere. The capture may be direct capture. The $CO_2$ may be anthropogenic $CO_2$, legacy $CO_2$, naturally produced $CO_2$, $CO_2$ from various sources such as decomposition $CO_2$, ocean release $CO_2$, respiration $CO_2$, industrial sources $CO_2$, deforestation $CO_2$, fossil fuel burning $CO_2$, transportation $CO_2$, fuel combustion $CO_2$, exhaust $CO_2$, the like, or their combination.

The system includes several components which cooperate mechanically, physically, chemically, fluidly, or a combination thereof. The system may include one more compartments housing the porous sorbent described herein, one or more mechanisms configured to regenerate the sorbent, one or more apparati for storage of the captured $CO_2$, one or more components for release of the outgoing air having a lower concentration of $CO_2$ than the incoming air, the like, or a combination thereof. The compartment may be a tank, vessel, container, canister, capsule, tub, chamber, cistern, flask, receptacle, or the like. The container may be a closed, enclosable, openable, sealable, and/or resealable container.

The compartments may include one or more air inputs structured as resealable or enclosable openings, one or more conduits connecting one or more portions of the system and arranged to lead one or more fluids between various portions of the system. The fluids may be air, exchange liquid(s), electrolyte(s), *etc.*

The system may utilize the solid porous sorbent in combination with a liquid exchange of transfer fluid having a chemical with preferential affinity for $CO_2$, configured to regenerate the sorbent after $CO_2$ is bound to the sorbent to a predetermined saturation point. The regeneration is realized by mediated transport of $CO_2$ from the sorbent by removing, desorbing, stripping, or displacing $CO_2$ absorbed onto the sorbent, and binding the $CO_2$. Alternatively, the system may use heat, changes in external pressure, changes in RH to regenerate the porous sorbent. The system may thus include a heat source, pressure regulator(s), humidity control system, or the like.

The system may further include one or more controllers, sensors, or both, receiving or providing inputs and outputs to trigger binding of $CO_2$, release of $CO_2$ from the sorbent, regeneration of the sorbent, or a combination thereof. The controller(s) may thus monitor, adjust, initiate, terminate, or contribute to binding and/or release of the sorbent, for example by controlling, adjusting, monitoring RH of the system, subsystem, or cell which the sorbent is present in. Alternatively, controlled flooding may be secured by the structural features of the sorbent disclosed herein, and may not need a controller's assistance. Non-limiting examples of a controller 90 and sensor 92 are schematically depicted in the system shown in Fig. 1. The placement and configuration is just schematical and may differ from that depicted in Fig. 1.

A method of preparing a sorbent for DAC system is disclosed herein. The method may include forming a porous sorbent including a functional group configured to capture or bind $CO_2$ from air and immobilizing the functional group on a support material which includes pores. The method may include polymerization, crosslinking of base components, or both to form a porous support material. The method may include tailoring the porosity of the material to achieve a balanced pore size distribution of nanopores having a size within the range of about 4-10 nm or any number within the range. The method may include checking, adjusting, confirming that the nanopores have substantial uniformity characteristic of shape, size, composition, or a combination thereof. For example, the method may include providing the sorbent with a majority of nanopores of size 4 nm. The method may include providing nanoparticles of a certain size to hold the pores open and/or expand the pores throughout the polymerization, crosslinking, or both.

The method may include using an initially non-porous support material and creating the desirable volume and size of nanopores within the support's volume. The method may include forming macropores and nanopores, as disclosed herein.

Alternatively, the method may include using a porous support sorbent material and adjusting, increasing, or decreasing the pore size. For example, the adjusting may include changing the size of the pores from about 1-3 nm to about 4-10 nm. The method may include expanding existing pores, for example by high-strain-rate tensile deformation or polymer crazing. Polymer crazing involves polymer fracture. The crazing may be triggered by application of excessive tensile stress to the support material, forming micro voids in a plane normal to stress.

Alternatively, the pores may be expanded by an addition of pore-expanding fluid. In a non-limiting example, the material may be saturated with $CO_2$ at high pressure and temperature. The temperature and/or pressure may then be brought closer to ambient conditions, leading the $CO_2$ to abruptly expand and push open the pores of the material. This processing may be additionally performed above the glass transition temperature of the sorbent material to facilitate the deformation of the polymeric material. At the end of the processing step, the polymer may be brought back below its glass transition temperature to lock in the pore-expanded structure.

Another alternative method may include blending the polymer with a phase-separating copolymer, e.g. dextran, with a characteristic length scale of the phase separation equal to the desired pore size. The method may include subsequently removing the copolymer by selective dissolution and leeching.

In addition to expanding or forming nanopores of the desired size distribution, the method may include adding nanoparticle additives. Alternatively, the method may include adding nanoparticles without expanding the pore size. The method may include providing the nanoparticles during the formation of the support material, as was described above. The method may include forming hydrophilic regions, hydrophobic regions, or both within the support material of the sorbent by including nanoparticles modified to be hydrophilic or hydrophobic, for example by having a relevant coating. The nanoparticles may be added after the pores are formed or expanded to a desirable size.

A method of using the sorbent disclosed herein is disclosed herein. The method may include providing the sorbent in a DAC system. The method may include sorbing $CO_2$ within the sorbent until a predetermined $CO_2$ saturation point, value, or range. The method may include regenerating the sorbent by using a exchange fluid with affinity to $CO_2$, thermally, or otherwise.

The method may include controlling the amount of water absorbed by the sorbent by maintaining, keeping, or adjusting RH of the system. The controlling may include receiving input from one or more sensors within the sorbent by one or more controllers. The controlling may include processing the input by the controller(s) and providing output to one or more additional components of the system such as a humidifier release valve, air input valve, dehumidifier or the like. The method may include removing water from the sorbent, releasing water into the sorbent, triggering saturation of the network, and varying the degree of flooding of the network. The method may include preventing excess water from reaching the channels by pausing or stopping the influx of water/steam, air, or both into the sorbent. The method may include regulating RH by the controller based on the input. The method may include maintaining RH at or below a predetermined value based on the size, hydrophobicity, hydrophilicity, or a combination thereof of the nanopores within the network. The method may include maintaining RH at a value of less than about 0.8.

EXPERIMENTAL SECTION

Water uptake by the porous sorbent disclosed herein may be described by the sum of two mechanisms. The first mechanism is the uptake of water by the bulk of the sorbent material, characterized by the hydrophilicity of the dense regions of the sorbent. The second mechanism is the condensation of liquid water in the nanopores of the material. The formation of liquid water in the nanopores of the material may be described by a capillary mechanism, in which the relative humidity at which condensation occurs is defined by the interfacial energy between the pore walls and liquid water and the characteristic diameter of the pore. For a pore with diameter d and interfacial energy $\gamma$, the critical relative humidity ($RH_{crit}$) for condensation (pore flooding) is given by the equation:

$$RH_{crit} = \mathrm{Exp}\left[{}^{\gamma}\!\big/\!{}_{d\rho_{H2O}RT}\right]$$

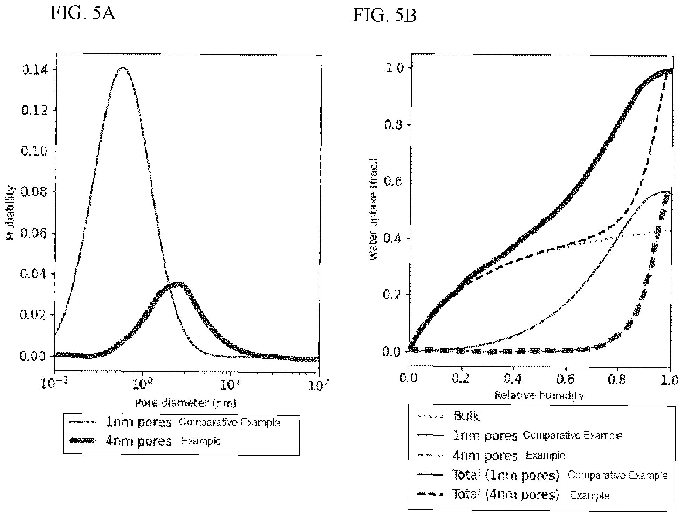

Where $\rho_{H2O}$ is the density of water, $R$ is the ideal gas constant, and $T$ is temperature. For a macroscopic material, the sizes of pores in the material can be described by a pore-size distribution, for example a log-normal distribution shown in Fig. 5A. Combined with the above equation, a representative water-uptake curve for the sorbent may be constructed for each pore-size distribution as shown in Fig. 5B.

As can be seen from Figs. 5A, 5B, a material with 1 nm nanopores representative of state-of-the-art sorbents (Comparative Example) takes up water continuously as relative humidity increases from 0 to 100%, with some pore flooding taking place as early as relative humidity (RH) = 0.2. In contrast, a sorbent disclosed herein having 4 nm nanopores (Example) does not exhibit appreciable pore flooding until RH = 0.8 and takes up water over a narrower range of relative humidities.

Fig. 5B shows water uptake curves corresponding to the pore size distributions of the Comparative Example and Example. As can be seen from Fig. 5B, modifying the pore-size distribution of a sorbent from the 1 nm scenario to the 4 nm scenario enabled more precise control over the water uptake by the sorbent. The water-uptake curve shown in Fig. 5B for the 4 nm Example prevented diffusion-blocking flooding from occurring until ambient humidity exceeded about 0.8-0.9. The dashed bottom line of the 4 nm Example exhibited lack of continuous flooding, showed no flooding, keeping consistently at or near 0 until RH of about 0.8. On the other hand, the Comparative Example line exhibited continuous water uptake from RH of about 0.1, consistently rising with increase in RH.

Furthermore, the Example's modified pore size distribution allowed condensed water to be removed from sorbent with only a small decrease in ambient humidity, enabling lower-cost sorbent regeneration.

The processes, methods, or algorithms disclosed herein may be deliverable to or implemented by a processing device, controller, or computer, which may include any existing programmable electronic control unit or dedicated electronic control unit. Similarly, the processes, methods, or algorithms may be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms may also be implemented in a software executable object. Alternatively, the processes, methods, or algorithms may be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, *etc.* As such, to the extent any embodiments are described as less desirable than other embodiments or prior art implementations with respect to one or more characteristics, these embodiments are not outside the scope of the disclosure and can be desirable for particular applications.

**Claims**

1. A direct air capture (DAC) system comprising:
   a porous sorbent structure for $CO_2$ capture, the structure including

   nanopores sized 4-10 nm forming an interpenetrating network of channels for $CO_2$ access to an interior volume of the sorbent;
   macropores for $CO_2$ diffusion within the sorbent; and
   nanoparticles sized about 4-10 nm and located within the network of channels.

**2.** The DAC system of claim 1, wherein the nanoparticles are hydrophobic.

**3.** The DAC system of claim 1, wherein the nanoparticles include hydrophobic and hydrophilic nanoparticles.

**4.** The DAC system of claim 1, wherein the nanoparticles include nanoparticles of substantially uniform size.

**5.** The DAC system of claim 1, wherein at least a portion of the nanopores and nanoparticles have a uniform size.

**6.** The DAC system of claim 1, wherein the channels include localized hydrophilic regions.

**7.** The DAC system of claim 1, wherein the system further includes a controller configured to regulate relative humidity of the system.

**8.** A direct air capture (DAC) system comprising:

a compartment including a porous sorbent structure for $CO_2$ capture, the structure including nanopores, each sized at at least about 4 nm, the nanopores forming an intertwined, interpenetrating network of channels configured to attract a controlled amount of water less than a volume causing flooding within the channels such that the sorbent's $CO_2$ sorption is increased and energy requirements of the sorbent regeneration are reduced; and
a controller programmed to regulate relative humidity (RH) of the system.

**9.** The DAC system of claim 8, wherein at least a portion of the nanopores includes nanopores of a uniform size.

**10.** The DAC system of claim 8, wherein majority of the nanopores have a size of about 4 nm.

**11.** The DAC system of claim 8, wherein the structure further includes a plurality of macropores.

**12.** The DAC system of claim 8, wherein the relative humidity is maintained at a value less than about 0.8.

**13.** The DAC system of claim 8, wherein the system further includes an exchange fluid configured to remove $CO_2$ from the structure through the channels.

**14.** The DAC system of claim 8, wherein the controlled amount of water in the sorbent is dependent on RH, temperature, and degree of $CO_2$ saturation of the

sorbent.

**15.** The DAC system of claim 8, wherein the network of channels further includes nanoparticles.

**16.** A direct air capture (DAC) system comprising:
a porous sorbent including

a network of nanopores penetrating a volume of the sorbent, the nanopores having a uniformity characteristic within a range of about 4-10 nm configured to allow a controlled amount of water within the network of nanopores; and
nanoparticles dispersed within the network of nanopores.

**17.** The DAC system of claim 16, wherein the controlled amount is less than an amount resulting in flooded channels.

**18.** The DAC system of claim 16, wherein the controlled amount is dependent on relative humidity (RH), temperature, and degree of $CO_2$-saturation of the sorbent.

**19.** The DAC system of claim 16, wherein the nanoparticles include hydrophobic nanoparticles.

**20.** The DAC system of claim 16, further comprising a controller programmed to maintain RH of the system below a predetermined value.

Step 1

Air

Air with lower
CO₂ content

$CO_2$
+
Amine → Amine-CO₂

92

20

Step 2

A

$CO_2$

B

Amine-CO₂ → Amine

90

**FIG. 1**

FIG. 2

22

20

PRIOR ART

24

FIG. 3

FIG. 4A

FIG. 4B

FIG. 5A

FIG. 5B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 162326